**Europäisches Patentamt**

**European Patent Office**

**Office européen des brevets**

(19)

(11) Veröffentlichungsnummer: **0 648 039 A1**

(12) **EUROPÄISCHE PATENTANMELDUNG**

(21) Anmeldenummer: **94114321.6**

(22) Anmeldetag: **12.09.94**

(51) Int. Cl.⁶: **H04M 15/00**, H04M 15/28

(30) Priorität: **13.09.93 DE 4331068**

(43) Veröffentlichungstag der Anmeldung:
**12.04.95 Patentblatt 95/15**

(84) Benannte Vertragsstaaten:
**AT BE CH DE FR GB IT LI LU SE**

(71) Anmelder: **SIEMENS AKTIENGESELLSCHAFT**
**Wittelsbacherplatz 2**
**D-80333 München (DE)**

(72) Erfinder: **Haag, Jürgen, Dipl.-Ing.**
**Jahnstrasse 53**
**D-64319 Pfungstadt (DE)**

(54) **Verfahren und Schaltungsanordnung zur Abfrage von Gebühreninformationen in Wählsystemen.**

(57) 2.1 Die bekannten technischen Lösungen beruhen auf der Übertragung des 16kHz Frequenzimpulses zum Fernsprechteilnehmer, seiner Auswertung und der Ausgabe einer entsprechenden Gebühreninformation. Da eine derartige Gebühreninformation auf der Aufsummierung aller übertragenen Impulse basiert verfälschen Störungen auf dem Übertragungsweg die Gebühreninformation.

2.2 Erfindungsgemäß wird dieser Mangel durch eine in der Vermittlungsstelle angeordnete Informationseinrichtung (IE) beseitigt, die direkt mit dem teilnehmerindividuellen Tarifeinheitenzähler (TEZ) verbunden ist, und die die originären Tarifinformationen des entsprechenden Tarifeinheitenzählers (TEZ) erfaßt. Auf Abruf wird die jeweils aktuelle Tarifinformation zum Fernsprechteilnehmer übertragen.

2.3 Beim Auftreten von Fehlern während der Übertragung wird die Gebühreninformation zwar ebenfalls verfälscht, aber im Gegensatz zu den bekannten Lösungen, bei denen sich die Fehler aufsummieren, führt die Abfrage weiterer Gebühreninformationen bei der erfindungsgemäßen Lösung zu einer Korrektur der Gebühreninformation.

Fig. 1

EP 0 648 039 A1

Die Erfindung betrifft ein Verfahren und eine Schaltungsanordnung zur Abfrage von Gebühreninformationen in Wählsystemen, die es dem Fernsprechteilnehmer ermöglicht, beliebig oft auf die jeweils aktuellen Gebühreninformationen zuzugreifen.

Bei bekannten SPC-Vermittlungsstellen werden Gebühreninformationen mittels systemgebundener Speichereinrichtungen bereitgestellt.

Bekannte Lösungen, die für Wählsysteme konzipiert sind, und die der Ermittlung und Zählung von Gebührensignalen dienen, beruhen auf der Auswertung des bei der DBP Telekom üblichen 16 kHz Gebührenanzeigers bzw. der Auswertung und Anzeige des über die Anschlußleitung übertragenen 16 kHz-Impulses mittels entsprechender Einrichtungen beim Fernsprechteilnehmer.

In der DE-OS 27211820 und der DE-OS 2851512 werden derartige Vorrichtungen zur Ermittlung und Zählung sowie Anzeige von Gebührensignalen bei Fernsprechverbindungen beschrieben.

Allen bekannten Lösungen ist gemein, daß erst nach Übertragung des 16 kHz-Frequenzimpulses über die entsprechende Anschlußleitung die Auswertung mittels einer beim Fernsprechteilnehmer angeordneten Vorrichtung zur Gebührenermittlung erfolgt.

Die Tatsache, daß dieser 16 kHz-Frequenzimpuls auf seinem Weg zum Anzeigegerät unterbrochen, beeinflußt oder verfälscht werden kann, macht diese Anzeige in einem gewissen Maße unsicher. Insbesondere die Tatsache, daß die beim Telefon oder einer Zusatzeinrichtung zur Anzeige gebrachte Gebühreninformation aus der Summe der aufsummierten Einzelimpulse besteht, die bei Übertragungsfehlern nicht durch Wiederholen der Information korrigiert werden kann, kennzeichnet den wesentlichen Mangel des bestehenden Verfahrens.

Der Erfindung liegt die Aufgabe zugrunde, die aufgezeigten Mängel zu vermindern und damit die Fehlerate bei der Abfrage von Gebühreninformationen für den Fernsprechteilnehmer so gering wie möglich zu halten, und in gewisser Weise auch eine Fehlerkorrektur zu bewirken.

Die Aufgabe wird erfindungsgemäß durch ein Verfahren und eine Schaltungsanordnung gelöst, bei dem mittels einer auf den jeweiligen Telefonanschluß bezogenen Informationseinrichtung in der Vermittlungsstelle, die direkten Zugriff zum Tarifeinheitenzähler TEZ des entsprechenden Fernsprechteilnehmers hat, die teilnehmerindividuellen Gebühreninformationen gespeichert werden. Die so gespeicherten Informationen werden über die Anschlußleitung Asl des Fernsprechteilnehmers mittels geeigneter Abrufverfahren vom Fernsprechteilnehmer abgefragt.

Die Abgabe der Information erfolgt entweder automatisch bei Gesprächsende oder -beginn oder kann durch geeignete Steuerzeichen vom Endgerät oder einer zusätzlichen Einrichtung durch den Fernsprechteilnehmer beliebig oft abgefordert werden. Im Falle einer Sprachansage ist dies ohne zusätzliche Einrichtungen beim Fernsprechteilnehmer möglich.

Die erfindungsgemäße Informationseinrichtung IE besteht aus einer Baugruppe zur Zählimpulsaufnahme $Z_i$, einem Impulszähler $I_z$, einer Baugruppe für die Sprachausgabe $S_g$ und einer Ansagebaugruppe mit Verstärker A/V. In die Ansagebaugruppe mit Verstärker AV wurde eine Baugruppe zum Erfassen des Belegtzustandes $B_Z$ integriert. Die Baugruppe zur Zählimpulsaufnahme ($Z_i$) ist über eine Zählader z direkt parallel an den Tarifeinheitenzähler TEZ in der Vermittlungsstelle angeschaltet.

Die Ansagebaugruppe mit Verstärker A/V mit integrierter Baugruppe zum Erfassen des Belegtzustandes ($B_Z$) ist sowohl mit den Sprechadern a, b als auch mit der Steuerader c der Teilnehmerschaltung TS in der Vermittlungsstelle verbunden. Am Impulszähler $I_Z$ ist ein Eingang für die individuelle Zählerbeeinflussung $E_z$ angeordnet.

Die erfindungsgemäße Lösung soll anhand eines Ausführungsbeispiels näher erläutert werden:

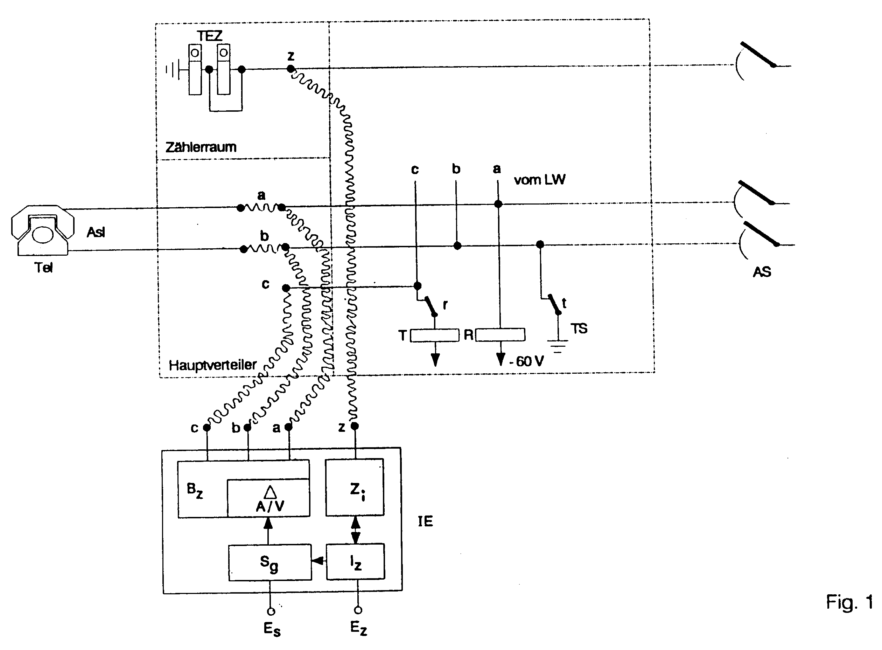

Fig. 1    zeigt das Blockschaltbild der Schaltungsanordnung mit den entsprechenden Anschaltepunkten in der Vermittlungsstelle.

Die für die Realisierung des erfindungsgemäßen Verfahrens benötigte Schaltungsanordnung wurde in Form einer Informationseinrichtung IE aufgebaut, die aus der Baugruppe für die Zählimpulsaufnahme $Z_i$ besteht, die über einen Impulszähler $I_Z$ und eine Baugruppe für die Sprachausgabe $S_g$ mit einer Ansagebaugruppe mit Verstärker A/V verbunden ist. Die Ansagebaugruppe mit Verstärker A/V ist wiederum mit der Baugruppe zum Erfassen des Belegtzustandes $B_Z$ zu einer Baugruppe integriert.

Die Baugruppe für die Zählimpulsaufnahme $Z_i$ ist parallel zum Tarifeinheitenzähler TEZ in der Vermittlungsstelle am Punkt z angeschaltet. Die Ansagebaugruppe mit Verstärker A/V ist mit den Sprechadern a und b der Teilnehmerschaltung TS des Fernsprechteilnehmers verbunden. Die Baugruppe zum Erfassen des Belegtzustandes $B_Z$ ist mit der Steuerader c und der Teilnehmerschaltung TS verbunden. Der Impulszähler $I_Z$ besitzt einen Eingang für die individuelle Zählerbeeinflussung $E_z$ und die Baugruppe für die Sprachausgabe $S_g$ besitzt zusätzlich einen Eingang für Sonderansagen $E_S$. Die Steuerung der Informationseinrichtung, d. h. Abfrage durch den Fernsprechteilnehmer und die Abgabe der Information zum Fernsprechteilnehmer, erfolgt über die Sprechadern a,b in Verbindung mit der Steuerader c.

Ein besonders einfaches Abrufverfahren wird im folgenden beschrieben:

Beispielsweise nach Gesprächsende legt der Fernsprechteilnehmer den Handapparat seines Telefons Tel auf. Danach hebt er den Handapparat wieder ab. Nach Ertönen des Wähltons wählt er eine beliebige Ziffer, wie beispielsweise eine "1". Dadurch wird der Wählton abgeschaltet. Wird innerhalb einer festgelegten Karenzzeit, wie beispielsweise einer Sekunde, keine weitere Ziffer gewählt, ist dies für die Informationseinrichtung IE das Startsignal für die Gebührenansage. Die Steuerung für diesen Vorgang erfolgt über die Steuerader c in Verbindung mit den Sprechadern a, b. Durch die Baugruppe zum Erfassen des Belegtzustandes $B_z$ und die Ansagebaugruppe mit Verstärker A/V wird nach Erkennung der Kriterien, Steuerader c potentialfrei, Wählton abgeschaltet und innerhalb der Karenzzeit kein erneuter Wählton auf den Sprechadern a und b, das Startsignal für die Gebührenansage durch Freigabe der Ansagebaugruppe mit Verstärker A/V gegeben. Damit wird über die Sprechadern a, b zum Telefon Tel des Fernsprechteilnehmers die aktuelle Gebühreninformation in Form einer Sprachansage ausgegeben.

Die an den Fernsprechteilnehmer ausgegebene Gebührenansage kann sich aus verschiedenen Elementen zusammensetzen, wie z. B. der Anzahl der Einheiten des letzten Gesprächs, der Gesamtzahl der Gesprächseinheiten seit der letzten Ablesung des Tarifeinheitenzählers TEZ sowie dem DM-Betrag bei einem bestimmten Gebührenfaktor.

Zusätzlich können über den Eingang für Sonderansagen $E_S$ Prüfansagen oder - bei Störungen usw. - Sonderansagen angeschaltet werden. Für das Rückrechnen von Prüfgesprächen und für Zählerrückstellungen ist ein zusätzlicher Eingang für die individuelle Zählerbeeinflussung $E_Z$ vorgesehen, der am Impulszähler $I_Z$ angeordnet ist.

Bei jeder monatlichen Zählerablesung des Tarifeinheitenzählers TEZ erfolgt über die Baugruppe für die Zählimpulsaufnahme $Z_i$ die Rückstellung (Nullstellung) der Informationseinrichtung IE. Zwischen zwei Zählerablesungen entpricht der in der Informationseinrichtung IE gespeicherte Zählerstand dem Aufkommen an Tarifimpulsen, das auch der mechanische Rollenzähler in der Vermittlungsstelle aufweist.

Eine weitere Möglichkeit der Ausgestaltung der erfindungsgemäßen Lösung beruht darauf, statt einer Sprachansage über die Informationseinrichtung IE eine Gebühreninformation an den Fernsprechteilnehmer auszugeben. Das setzt voraus, daß der Fernsprechteilnehmer über ein entsprechendes Telefon Tel oder eine Zusatzeinrichtung zum Telefon Tel verfügt, die diese Gebühreninformation aufnehmen, verarbeiten und beispielsweise mittels eines Displays ausgeben kann. Denkbar wäre für diese Ausführungsform die Übertragung von Zählerstandsinformationen im MFV- oder FSK-Signalisierungsverfahren.

Die erfindungsgemäße Lösung beeinflußt nicht die Anwendung von Zusatzgeräten auf der Anschlußleitung, d. h., daß auch ein 16 kHz-Gebührenanzeiger weiterhin als zusätzliche Einrichtung zur fortlaufenden ergänzenden Gebühreninformation während des Gesprächs angeschaltet werden bzw. angeschaltet bleiben kann.

Der Hauptvorteil der erfindungsgemäßen Lösung beruht insbesondere darauf, daß die in der Vermittlungsstelle originär gespeicherte Gebühreninformation beliebig oft abgefragt werden kann, und daß dabei auftretende Übertragungsfehler zwar eine Ansage oder Anzeige verfälschen können, daß jedoch im Gegensatz zu den bekannten Lösungen bei erneuter Abfrage der Gebühreninformation mit aller Wahrscheinlichkeit wieder eine der Anzeige auf dem Tarifeinheitenzähler TEZ adäquate Gebühreninformation an den Fernsprechteilnehmer ausgegeben wird, da bei jeder Gebührenabfrage immer die originäre Gebühreninformation übertragen wird.

Durch die erfindungsgemäße Lösung wird erreicht, daß der Fernsprechteilnehmer fortlaufend unmittelbaren Zugang zu den rechnungsrelevanten originären Gebühreninformationen erhält.

**Aufstellung der verwendeten Bezugszeichen**

| Zeichen | Bedeutung |
|---|---|
| Bz | Baugruppe zum Erfassen des Belegtzustandes |
| A/V | Ansagebaugruppe mit Verstärker |
| Zi | Baugruppe zur Zählimpulsaufnahme |
| Sg | Baugruppe für die Sprachausgabe |
| Iz | Impulszähler |
| Ez | Eingang für die individuelle Zählerbeeinflussung |
| Es | Eingang für die Sonderansagen |
| Tel | Telefon |
| IE | Informations-einrichtung |
| TEZ | Tarifeinheitenzähler |
| LW | Leitungswähler |
| TS | Teilnehmerschaltung |
| T | Relais |
| R | Anrufsucher |
| As | |
| a | Sprechadern |
| b | Steuerader |
| c | Zahlader |
| z | |
| r | Relaiskontakte |
| t | Anschlußleitung |
| Asl | |

## Patentansprüche

1. Verfahren zur Abfrage von Tarifinformationen in Wählsystemen, **dadurch gekennzeichnet,** daß für mindestens einen Fernsprechteilnehmer die originären Tarifinformationen mittels einer Informationseinrichtung (IE), die in der Vermittlungsstelle angeordnet ist und die direkt mit dem teilnehmerindividuellen Tarifeinheitenzähler (TEZ) verbunden ist, permanent erfaßt und gespeichert werden, und daß bei jeder Abfrage der Informationseinrichtung (IE), die durch den betreffenden Fernsprechteilnehmer ausgelöst wird, eine jeweils dem aktuellen Stand des Tarifeinheitenzählers (TEZ) entsprechende Tarifinformation an den Fernsprechteilnehmer ausgegeben wird.

2. Verfahren zur Abfrage von Tarinfinformationen nach Anspruch 1, dadurch gekennzeichnet, daß die Abfrage der Tarifinformationen ohne zusätzliche Einrichtung beim Fernsprechteilnehmer erfolgt, daß durch Betätigung des Gabelumschalters des Telefons (Tel), durch Wahl einer beliebigen Ziffer und anschließende Einhaltung dieses Zustandes über eine festgelegte Karenzzeit die Anforderung der Tarifinformation ausgelöst wird, daß die auf den Sprechadern (a, b) und der Steuerader (c) anliegenden Signalzustände durch die Informationseinrichtung (IE) abgefragt werden, daß bei Vorliegen der Information Steuerader (c) potentialfrei, Wählton abgeschaltet und innerhalb der Karenzzeit kein neuer Wahlimpuls, über die Informationseinrichtung (IE) die Ausgabe der aktuellen Tarifinformation in Form einer Sprachansage zum Fernsprechteilnehmer erfolgt.

3. Verfahren nach Anspruch 1, dadurch gekennzeichnet, daß die Abfrage der Tarifinformation vom Fernsprechteilnehmer über eine zusätzliche Teilnehmereinrichtung mit integriertem Display mittels geeigneter Steuerzeichen beliebig oft ausgelöst werden kann, und daß über ein für die Anschlußleitung (Asl) geeignetes Zeichengabeverfahren nach jeder Abfrage die jeweils aktuelle Tarifinformation von der Informationseinrichtung (IE) zur zusätzlichen Teilnehmereinrichtung übertragen und dort über das Display ausgegeben wird.

4. Verfahren nach Anspruch 1, dadurch gekennzeichnet, daß die Übertragung der aktuellen Tarifinformation automatisch mittels geeigneter Steuerzeichen vor Gesprächsbeginn und/oder nach Gesprächsende erfolgt.

5. Schaltungsanordnung zur Abfrage von Tarifinformationen in Wählsystemen, unter Verwendung einer Informationseinrichtung, die aus einer Baugruppe zur Zählimpulsaufnahme ($Z_i$), einem Impulszähler ($I_Z$), einer Baugruppe für die Sprachausgabe ($S_g$) und einer Ansagebaugruppe mit Verstärker (A/V) besteht, dadurch gekennzeichnet, daß in die Ansagebaugruppe mit Verstärker (A/V) zusätzlich eine Baugruppe zum Erfassen des Belegtzustandes ($B_Z$) integriert ist, daß die Baugruppe zur Zählimpulsaufnahme ($Z_i$) über eine Zählader (z) parallel zum Tarifeinheitenzähler (TEZ) in der Vermittlungsstelle angeschaltet ist, daß die Ansagebaugruppe mit Verstärker (A/V) mit integrierter Baugruppe zum Erfassen des Belegtzustandes ($B_Z$) mit den Sprechadern (a, b) und der Steuerader (c) der Teilnehmerschaltung (TS) verbunden ist, und daß am Impulszähler ($I_Z$) ein Eingang für die individuelle Zählerbeeinflussung ($E_Z$) angeordnet ist.

6. Schaltungsanordnung nach Anspruch 4, dadurch gekennzeichnet, daß an der Baugruppe für die Sprachausgabe ($S_g$) ein zusätzlicher Eingang für Sonderansagen ($E_S$) angeordnet ist.

7. Schaltungsanordnung nach Anspruch 4, dadurch gekennzeichnet, daß die Ansagegruppe mit Verstärker (A/V) so ausgebildet ist, daß über sie die Tarifinformation mittels eines für die Anschlußleitung (Asl) geeigneten Zeichengabeverfahrens zum Telefon (Tel) oder zu einer dem Telefon (Tel) zugeordneten Zusatzeinrichtung übertragen wird.

Fig. 1

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| X | PATENT ABSTRACTS OF JAPAN vol. 13, no. 371 (E-807) 17. August 1989 & JP-A-01 125 055 (MATSUSHITA ELECTRIC IND CO) 17. Mai 1989 | 1-4 | H04M15/00 H04M15/28 |
| A | * Zusammenfassung * <br> --- | 5-7 | |
| A | IEEE TRANSACTION ON AUDIO AND ELECTROACOUSTICS - ISSN 0018-9278, Bd.AU-21, Nr.3, Juni 1973, USA Seiten 291 - 292 'An audio response unit for telephone needs' * das ganze Dokument * <br> --- | 1-7 | |
| A | DE-A-40 39 970 (WILHELM RUTENBECK GMBH & CO) * Zusammenfassung * <br> --- | | |
| A | GB-A-2 141 309 (CHRISTOPHER HARDING MOLLER) * Zusammenfassung * <br> --- | | **RECHERCHIERTE SACHGEBIETE (Int.Cl.6)** |
| A | US-A-4 255 621 (MARHEINE) * das ganze Dokument * <br> ----- | | H04M |

Der vorliegende Recherchenbericht wurde für alle Patentansprüche erstellt

| Recherchenort | Abschlußdatum der Recherche | Prüfer |
|---|---|---|
| DEN HAAG | 25. November 1994 | Montalbano, F |